# EUROPÄISCHE PATENTANMELDUNG

(11) **EP 4 485 306 A1**
(43) Veröffentlichungstag der Anmeldung: **01.01.2025**
(21) Anmeldenummer: 23182064.8
(22) Anmeldetag: 28.06.2023
(51) Int. Cl.: G06Q 10/08, G06Q 10/10, G06Q 50/08

(54) **SYSTEM UND VERFAHREN ZUR BESTIMMUNG EINES SCHUTZELEMENTS**

(71) Anmelder: Hilti Aktiengesellschaft, 9494 Schaan (LI)
(72) Erfinder: Esu, Ozak, 9470 Buchs (CH); Moores, Luke Derek, Bath, BA2 3DL (GB); Petousis, Ioannis, 8853 Lachen SZ (CH)
(74) Vertreter: Hilti Aktiengesellschaft Corporate Intellectual Property

(57) **Zusammenfassung**

Die Erfindung betrifft ein **System (30)** zur Bestimmung eines Schutzelementes (12) einer Schutzelementart zur Verwendung in einer Anwendungssituation (14), die ein Bauwerksteil (10) betrifft. Es umfasst ein Eingabegerät (37), ein Ausgabegerät (40) sowie eine Datenbank (25), wobei die Datenbank (25) eine Vielzahl von Vergleichsdatensätzen (26) umfasst, die Daten zu jeweils einer Vergleichs-Anwendungssituation (27) umfassen, wobei das System (30) eingerichtet ist, über das Eingabegerät (37) einen Eingabedatensatz (36) zu empfangen, der Daten zu der Anwendungssituation (14) umfasst, und abhängig von dem Eingabedatensatz (36) über das Ausgabegerät (40) wenigstens einen der Vergleichsdatensätze (26), einen Teil wenigstens eines der Vergleichsdatensätze (26), einen Verweis auf wenigstens einen der Vergleichsdatensätze (26) und / oder wenigstens einen Bezeichner (42) eines Schutzelements (12) der Schutzelementart auszugeben. Bauwerksteile (10) können damit auf besonders kostengünstige, aber dennoch zuverlässige Weise mit geeigneten Schutzelementen (12) ausgestattet werden. Des Weiteren betrifft die Erfindung auch ein Verfahren (100).

## Beschreibung

Die Erfindung betrifft ein System zur Bestimmung eines Schutzelementes einer Schutzelementart zur Verwendung in einer Anwendungssituation, die ein Bauwerksteil betrifft.

Um Bauwerksteile hinsichtlich unterschiedlicher Gefahren zu schützen, beispielsweise Brandgefahr, sind unterschiedliche Schutzelemente, beispielsweise Brandschutzelemente, verfügbar. Die Schutzelemente sind jeweils für spezifische Anwendungssituationen verwendbar und insbesondere für diese zertifiziert.

Bei der Planung von Bauwerksteilen können sich jedoch Anwendungssituationen ergeben, die keiner dieser spezifischen Anwendungssituationen unmittelbar entsprechen und für die somit kein unmittelbar hierfür zertifiziertes Schutzelement verfügbar ist. Um für eine solche Anwendungssituation somit einen ausreichenden Schutz sicherzustellen, sind aufwendige Einzelanalysen notwendig. Diese können häufig sehr zeitaufwändig sein. Die Ergebnisse, und damit die Sicherheit und Lebensdauer der Bauwerksteile können somit erheblich von der Ausbildung und Erfahrung sowie auch Konzentrationsfähigkeit derer abhängen, die diese Einzelanalysen erstellen.

Aufgabe der vorliegenden Erfindung ist es daher, ein System und ein Verfahren anzubieten, die einen zuverlässigen Schutz von Bauwerksteilen ermöglichen. Besonders bevorzugt sind dabei Systeme und Verfahren, die darüber hinaus einen besonders kostengünstigen Schutz der Bauwerksteile ermöglichen.

Gelöst wird die Aufgabe zunächst durch ein **System** zur Bestimmung eines Schutzelementes einer Schutzelementart zur Verwendung in einer Anwendungssituation, die ein Bauwerksteil betrifft, umfassend ein Eingabegerät, ein Ausgabegerät sowie eine Datenbank, wobei die Datenbank eine Vielzahl von Vergleichsdatensätzen umfasst, die Daten zu jeweils einer Vergleichs-Anwendungssituation umfassen, wobei das System eingerichtet ist, über das Eingabegerät einen Eingabedatensatz zu empfangen, der Daten zu der Anwendungssituation umfasst, und abhängig von dem Eingabedatensatz über das Ausgabegerät wenigstens einen der Vergleichsdatensätze, einen Teil wenigstens eines der Vergleichsdatensätze, einen Verweis auf wenigstens einen der Vergleichsdatensätze und / oder wenigstens eine Bezeichnung eines Schutzelements der Schutzelementart auszugeben.

Der Eingabedatensatz umfasst Daten der Anwendungssituation. Das System kann somit ermöglichen, anhand des Eingabedatensatz einen oder mehrere Vergleichsdatensätze zuzuordnen und / oder auszugeben. Selbst wenn für die durch den Eingabedatensatz repräsentierte Anwendungssituation kein identischer Vergleichsdatensatz und damit kein unmittelbar für die Anwendungssituation zertifiziertes Schutzelement verfügbar ist, kann anhand des einen Vergleichsdatensatzes bzw. der mehreren Vergleichsdatensätze ein für diese Anwendungssituation geeignetes Schutzelement bzw. dessen Bezeichner ermittelt werden.

Das System kann auch eingerichtet sein, unmittelbar eine Bezeichnung zu ein oder mehreren geeigneten Schutzelementen auszugeben.

Mit Hilfe des Systems kann eine große Vielzahl von Vergleichsdatensätzen kostengünstig, reproduzierbar und qualitätsgesichert ausgewertet werden. Mit den derart bestimmten Schutzelementen kann dann das Bauwerksteil ausgestattet werden, sodass das Bauwerksteil zuverlässig durch das geeignete Schutzelement geschützt werden kann. Durch die kostengünstige Bestimmung des Schutzelementes kann dieser zuverlässige Schutz auch besonders kostengünstig erhalten werden. Fehlerhafte Bestückungen von Bauwerksteilen mit ungeeigneten Schutzelementen aufgrund von Ausbildungs- oder Erfahrungsmängeln oder Übermüdung oder dergleichen werden vermieden.

Das Bauwerksteil kann ein Teil oder das gesamte Bauwerk eines Hochbau- oder eines Tiefbau-Bauwerkes, eines Stahlbauwerkes wie beispielsweise einer Ölbohrplattform, oder dergleichen umfassen. Das Bauwerksteil kann beispielsweise eine Wand, eine Decke und / oder ein Boden des Bauwerks sein oder umfassen.

Die Vergleichsdatensätze können auch ein oder mehrere Ergebnisse des Systems von früheren Bestimmungen von Vergleichsdatensätzen und / oder geeigneten Schutzelementen für frühere Anwendungssituationen umfassen.

Die Vergleichsdatensätze können derart ausgewählt sein, dass sie bestimmte Mindestqualitätsanforderungen erfüllen. Beispielsweise können sie auf Ergebnisse früherer Einzelanalysen bestimmter Experten, die beispielsweise bestimmte Ausbildungsanforderungen erfüllen und / oder bestimmte Mindesterfahrungen aufweisen, beschränkt sein.

Die Vergleichsdatensätze können vorzugsweise Anwendungssituationen betreffen, für die Schutzelemente der gewünschten Schutzelementart verfügbar und / oder zertifiziert sind. Kann somit ein solcher Vergleichsdatensatz dem Eingabedatensatz zugeordnet werden, lässt sich aus dem Vergleichsdatensatz unmittelbar ein geeignetes Schutzelement ableiten. Dazu kann die Datenbank zu wenigstens einem, vorzugsweise zu allen, der Vergleichsdatensätze jeweils wenigstens einen Bezeichner eines zugeordneten Schutzelements der Schutzelementart umfassen.

Das System kann eingerichtet sein, dem Eingabedatensatz einen oder mehrere vergleichbare Vergleichsdatensätze zuzuordnen und / oder auf dem Ausgabegerät auszugeben. Die Vergleichsdatensätze und / oder mit diesen verbundene Bezeichner von Schutzelementen können dann auf dem Ausgabegerät ausgegeben werden.

Findet sich kein vergleichbarer Vergleichsdatensatz, kann das System auch eingerichtet sein, kein Ergebnis oder ein Fehlersignal, das signalisiert, dass kein vergleichbarer Vergleichsdatensatz verfügbar ist, zuzuordnen und / oder auf dem Ausgabegerät auszugeben.

Bei der Planung von Bauwerksteilen können sich sehr verschiedenartige Anwendungssituationen ergeben. Zur Beschreibung dieser vielfältigen Anwendungssituationen können insbesondere Bilddaten, beispielsweise in Form von CAD-Zeichnungen, Fotografien, Skizzen oder dergleichen, vorliegen und / oder erstellt werden. Derartige Bilddaten können Anwendungssituationen sehr detailliert und präzise abbilden. Beispielsweise lassen sich mittels Bilddaten geometrische Verhältnisse einfach und präzise beschreiben. Daher ist es günstig, wenn der Eingabedatensatz und / oder wenigstens einer der Vergleichsdatensätze Bilddaten umfasst.

Das System kann dann vorzugsweise eingerichtet sein, Bilddaten des Eingabedatensatzes und / oder eines oder mehrerer Vergleichsdatensätze zu verarbeiten. Das System kann dazu eine Bildverarbeitungseinheit und / oder eine Bild- und Sprachverarbeitungseinheit, beispielsweise in Form eines Vision-Language-Models, aufweisen.

Häufig erfolgen Zertifizierungen von Schutzelementen für bestimmte kategoriale Eigenschaften der Anwendungssituationen, beispielsweise für bestimmte Materialarten, für bestimmte Lagen wie beispielsweise Montage in einer Wand, an einer Decke, oder dergleichen, für bestimmte Schutzstufen, beispielsweise für bestimmte Widerstandsklassen, oder dergleichen. Dazu kann vorgesehen sein, dass der Eingabedatensatz und / oder wenigstens einer der Vergleichsdatensätze nominalskalierte Daten umfasst. Das System kann eingerichtet sein, derartige nominalskalierte Daten des Eingabedatensatzes und / oder wenigstens einer der Vergleichsdatensätze zu verarbeiten. Dabei bieten nominalskalierte Daten ferner den Vorteil, dass durch sie der Eingabedatensatz und / oder die Vergleichsdatensätze unmittelbar kategorisierbar sind. Der Eingabedatensatz kann somit sehr einfach und schnell, zumindest in Bezug auf Eigenschaften mit nominalskalierten Daten mit einem oder mehreren der Vergleichsdatensätze verglichen werden.

Um eine größtmögliche Flexibilität des Systems zu ermöglichen, kann auch vorgesehen sein, dass der Eingabedatensatz und / oder wenigstens einer der Vergleichsdatensätze Textdaten umfasst. Dementsprechend kann das System eingerichtet sein, derartige Freitext-Daten zu verarbeiten. Das System kann dazu ein Modul zur Verarbeitung natürlicher Sprache, im Folgenden NLP-Modul, natural language processing module, aufweisen.

Zur Auswahl und / oder Klassifikation von Vergleichsdatensätzen kann das System eingerichtet sein, eine Teilmenge der Vergleichsdatensätze in Abhängigkeit vom Eingabedatensatz zu bestimmen. Es kann insbesondere einen Klassifikator umfassen. Es kann eingerichtet sein, mehr als einen Vergleichsdatensatz und / oder mehr als einen Bezeichner auszugeben. Dies ermöglicht es, mehrere, im Hinblick auf die Anwendungssituation gleichwertige Vergleichsdatensätze und / oder mehrere gleichwertige Bezeichner auszugeben.

Das System kann wenigstens eine Abbildungsmatrix zur 1:n-Zuordnung von Eigenschaftswerten einer Anwendungssituation aufweisen. Dabei kann vorzugsweise n >=2 sein. Die Abbildungsmatrix kann also derart ausgebildet sein, dass einem Eigenschaftswert ein oder mehrere Eigenschaftswerte zugeordnet werden. Beispielsweise kann im Hinblick auf eine bestimmte Schutzelementart, beispielsweise im Bereich von Brandschutzelementen, das Material eines Untergrundes zur Auswahl eines geeigneten Schutzelementes nur begrenzt relevant sein. Beispielsweise könnte es sein, dass eine Brandschutzdichtungsmasse, die für die Verwendung auf Beton zertifiziert ist, auch für die Verwendung auf Gipskarton, nicht aber zur Verwendung auf Holz, geeignet sein. Dann könnte die Abbildungsmatrix eine Zuordnung des Materialeigenschaftswertes "Gipskarton" zu "Gipskarton" und "Beton", also eine 1:2-Zuordnung, aufweisen. Sie könnte ferner lediglich die Zuordnung des Materialeigenschaftswertes "Holz" zu "Holz", also eine 1:1-Zuordnung, aufweisen usw.

Mit Hilfe einer solchen Abbildungsmatrix können für einzelne Eigenschaften der Anwendungssituationen geeignete Vergleichsdatensätze sehr effizient vorselektioniert werden.

Das System kann auch mehrere Abbildungsmatrizen, insbesondere für mehr als eine Eigenschaft der Anwendungssituationen, aufweisen. Durch sequentielle Filterung anhand der verschiedenen Abbildungsmatrizen kann so bereits eine besonders weitreichende Vorselektionierung erfolgen.

Die Abbildungsmatrizen können mit Hilfe von Experteneinschätzungen gewonnen werden.

Das System kann einen Maschinenlerner aufweisen. Insbesondere kann das System einen Maschinenlerner aufweisen und / oder ein Maschinenlerner sein. Der Maschinenlerner kann beispielsweise ein neuronales Netz, eine Support-Vektor-Maschine, eine Deep Learning-Einheit, oder dergleichen aufweisen. Der Maschinenlerner kann anhand von manuell angefertigten Experteneinschätzungen zu Anwendungssituationen und geeigneten Schutzelementen, beispielsweise den für die jeweiligen Anwendungssituationen zertifizierten Schutzelementen, trainiert sein. Denkbar ist, dass das System, insbesondere der Maschinenlerner, eingerichtet ist, ein Feedback zu empfangen und, besonders bevorzugt, mit Hilfe des Feedbacks den Maschinenlerner zu aktualisieren, insbesondere nachzutrainieren.

Das System kann somit insgesamt eingerichtet sein, ein oder mehrere der Vergleichsdatensätze anhand einer Ähnlichkeit dieser mit dem Eingabedatensatz zu filtern.

Bei einer zu geringen Ähnlichkeit, insbesondere bei Überschreiten eines Grenzwertes einer Distanz zwischen dem die Anwendungssituation repräsentierenden Eingabedatensatz und einem oder mehreren, insbesondere jedem, der Vergleichsdatensätze, kann das System eingerichtet sein, keinen Vergleichsdatensatz, keinen Verweis auf wenigstens einen der Vergleichsdatensätze und keinen Bezeichner auszugeben.

In diesem Fall kann beispielsweise ein Fehlersignal ausgegeben werden. Das Fehlersignal kann dazu korrespondieren, dass kein hinreichend ähnlicher Vergleichsdatensatz gefunden werden konnte.

Die Schutzelementart kann Brandschutzelemente, Dämmelemente, also Elemente zum Schutz vor Energieverlust und / oder Energieeintrag, insbesondere vor Wärme- und / oder Kälteverlust, Lärmschutzelemente und / oder Feuchtigkeitsschutzelemente betreffen.

Insbesondere bei Brandschutz ergeben sich oftmals spezielle Anwendungssituationen, die durch Standard-Zulassungsverfahren nicht abgedeckt werden können. Das System ist ferner insbesondere dann besonders vorteilhaft, wenn die Schutzelementart Brandschutzelemente betrifft, da sich fehlende oder falsche Brandschutzmaßnahmen im Brandfall besonders verheerend auswirken können.

In den Rahmen der Erfindung fällt des Weiteren ein **Verfahren** zur Bestimmung eines Schutzelementes einer Schutzelementart zur Verwendung in einer Anwendungssituation, die ein Bauwerksteil betrifft, wobei unter Verwendung eines Systems der vorangehend und / oder nachfolgend beschriebenen Art ein Eingabedatensatz, der Daten zu einer Anwendungssituation umfasst, mit einer Vielzahl von Vergleichsdatensätzen, die jeweils Vergleichs-Anwendungssituationen sowie jeweils wenigstens ein zugeordnetes Schutzelement der Schutzelementart umfassen, verglichen wird, und wobei als Ergebnis des Vergleichs wenigstens einer der Vergleichsdatensätze, ein Teil wenigstens eines der Vergleichsdatensätze, ein Verweis auf wenigstens einen der Vergleichsdatensätze und / oder ein Bezeichner eines Schutzelements der Schutzelementart ermittelt wird. In analoger Argumentation wie vorangehend für das System beschrieben, ermöglicht somit auch das Verfahren einen besonders kostengünstigen und sicheren Schutz von Bauwerksteilen, insbesondere ganzer Bauwerke.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: ein Bauwerksteil mit unterschiedlichen Schutzelementen,
- Fig. 2a-c: schematische Darstellungen eines Anwendungssituation, eines Vergleichsdatensatzes sowie eines Ergebnisdatensatzes;
- Fig. 3: ein Schema für ein Verfahren zur Bestimmung eines Schutzelementes einer Schutzelementart für ein Bauwerksteil,
- Fig. 4: ein System mit mehreren Systemteilen zur Bestimmung eines Schutzelementes,
- Fig. 5: eine Ähnlichkeitsmatrix;
- Fig. 6: eine weitere Ähnlichkeitsmatrix und
- Fig. 7: alternative Systemteile zur Bestimmung eines Schutzelementes.

In der nachfolgenden Beschreibung der Figuren werden zur Erleichterung des Verständnisses der Erfindung für gleiche oder sich funktional entsprechende Elemente jeweils die gleichen Bezugszeichen verwendet.

Die im Folgenden beschriebenen Ausführungsbeispiele beziehen sich auf Brandschutzmaßnahmen. Somit betreffen die folgenden Ausführungen Schutzelemente, die als Brandschutz-Schutzelemente ausgebildet sind. Dies ist lediglich beispielhaft zu verstehen; es ist denkbar, die gezeigten Systeme und Verfahren auch für andere Schutzelement-Arten, beispielsweise ein oder mehrere der vorangehend genannten Schutzelement-Arten, zu nutzen.

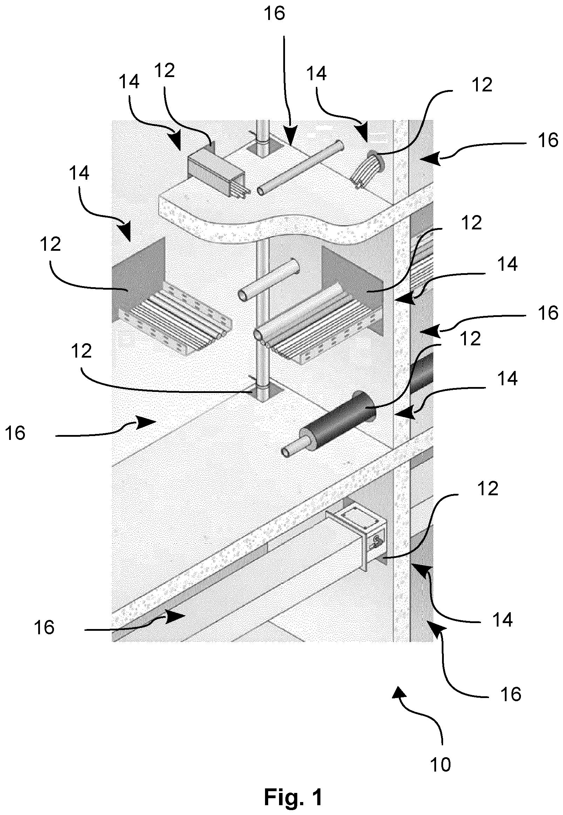

**Fig. 1** zeigt ein Bauwerksteil **10** in einer schematischen, perspektivischen, teilgeschnittenen Ansicht, insbesondere einen Ausschnitt aus einem Gebäude, mit einer Vielzahl von Schutzelementen **12** in unterschiedlichen Anwendungssituationen **14.** Die Schutzelemente 12 sind als Brandschutzelemente ausgebildet. Insbesondere sind sie eingerichtet, eine Brandausbreitung von einem Raum **16** in einen anderen Raum 16 oder umgekehrt zu vermeiden oder zumindest je nach Schutzklasse zu erschweren. Die Anwendungssituationen 14 können sich beispielsweise hinsichtlich der Art des Untergrundmaterials, bei Wanddurchbrüchen hinsichtlich der Abmessungen und/oder den Formen der Wanddurchbrüche, der durch die Wanddurchbrüche hindurch zuführenden Elemente, beispielsweise Versorgungsleitungen oder Stromleitungen, hinsichtlich der erforderlichen Flexibilität, also ob oder inwieweit nachträglich Änderungen am Schutzelement 12 nötig oder möglich sind, hinsichtlich erforderlicher, zu erreichender Brandschutz-Schutzklassen und / oder dergleichen unterscheiden.

Um einen optimalen Brandschutz zu gewährleisten, sind die Schutzelemente 12 für solche Anwendungssituationen 14 entsprechend den jeweiligen Zertifizierungen der Schutzelemente 12 auszuwählen und ordnungsgemäß einzubauen. In Fällen, bei denen eine Anwendungssituation 14 keiner der Anwendungssituationen, für die Schutzelemente 12 verfügbar, insbesondere zertifiziert, sind, entspricht, sollte soweit möglich eine möglichst vergleichbare Anwendungssituation, für die ein Schutzelement 12 verfügbar ist, ermittelt werden.

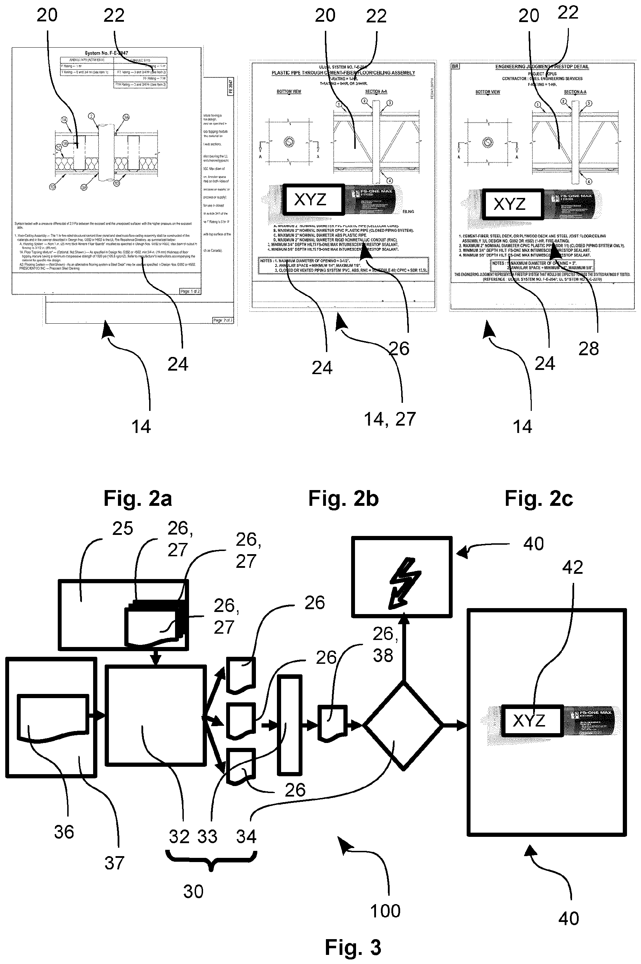

**Fig. 2a, 2b und 2c** zeigen schematische Darstellungen von Anwendungssituationen 14. Diese Darstellungen umfassen in den dargestellten Beispielen Bilddaten **20,** nominalskalierte Daten **22** sowie strukturierte, semi-strukturierte und / oder unstrukturierte Textdaten **24.** Die Textdaten 24 können auch wenigstens nominalskaliert sein.

Die Bilddaten stellen unter anderem geometrische Besonderheiten der Anwendungssituationen 14 dar.

Die nominalskalierten Daten 22 betreffen beispielsweise Bezeichnungen von Materialien oder zu erreichende Schutzklassen. Sie können neben echt nominalskalierten Daten auch höher skalierte Daten, insbesondere ordinalskalierte Daten, umfassen.

Die Textdaten 24 umfassen ergänzende Informationen zu den Anwendungssituationen 14, beispielsweise hinsichtlich des Schichtaufbaus des in den Bilddaten 20 dargestellten Bodens, einer Decke oder einer Wand. Es können auch weitere Maßangaben, Verweise auf einzuhaltende Normierungen und Standards, oder dergleichen enthalten sein.

**Fig. 2a** zeigt dazu ein Beispiel einer Anwendungssituation 14 aus einer Liste von Standard-Anwendungssituationen.

**Fig. 2b** zeigt ein Beispiel einer Anwendungssituation 14, für die ein Schutzelement 12 in Form eines Brandschutzelements zertifiziert ist. Im dargestellten Beispiel handelt es sich um eine in einer Tube abgefüllten brandhemmenden Dichtpaste zur Abdichtung von Spalten zwischen einer Wand oder einem Boden und einem durch die Wand bzw. dem Boden hindurch zu führenden Rohres.

Die Anwendungssituation 14 kann zusammen mit dem zugehörigen Schutzelement 12, das für die Anwendungssituation 14 zertifiziert ist, einen Vergleichsdatensatz **26** für ein im Folgenden noch näher beschriebenes System bilden. Hier und im Folgenden werden Anwendungssituationen 14 von Vergleichsdatensätzen 26 auch als Vergleichs-Anwendungssituationen **27** bezeichnet.

**Fig. 2c** zeigt ein Beispiel eines möglichen Ergebnisdatensatzes **28,** der beispielsweise durch das noch zu beschreibende System gewonnen werden kann. In dem dargestellten Beispiel umfasst der Ergebnisdatensatz 28 ebenfalls eine Anwendungssituation 14 sowie ein zugehöriges, wie nachfolgend noch näher beschrieben ermitteltes, Schutzelement 12.

In den Beispielen gemäß Fig. 2b und 2c entsprechen sich der Vergleichsdatensatz 26 und der Ergebnisdatensatz 28 weitgehend, beispielsweise stimmen die jeweiligen Bilddaten 20 überein, Unterschiede bestehen hinsichtlich der Textdaten 24.

**Fig. 3** zeigt ein Verfahren **100** zur Bestimmung eines Schutzelementes 12 (siehe Fig. 1) einer Schutzelementart, im vorliegenden Beispiel insbesondere ein Brandschutzelement, zur Verwendung in einer Anwendungssituation 14 (siehe z. B. Fig. 2a), die ein Bauwerksteil 10 (siehe Fig. 1) betrifft, wobei unter Verwendung eines Systems **30,** das in diesem Ausführungsbeispiel ein erstes, ein zweites und ein drittes Systemteil **32, 33** bzw. **34** umfasst, ein Eingabedatensatz **36,** der Daten zu der Anwendungssituation 14 umfasst, mit einer in einer Datenbank **25** gespeicherten Vielzahl von Vergleichsdatensätzen 26, die jeweils Daten zu Vergleichs-Anwendungssituationen 27 sowie jeweils wenigstens ein zugeordnetes Schutzelement 12 der Schutzelementart umfassen, verglichen wird, und wobei als Ergebnis des Vergleichs wenigstens einer der Vergleichsdatensätze 26, wenigstens ein Teil eines der Vergleichsdatensätze 26, ein Verweis auf wenigstens einen der Vergleichsdatensätze 26 und / oder ein Bezeichner eines Schutzelements 12 der Schutzelementart ermittelt wird.

Somit ist in diesem Ausführungsbeispiel das System 30 mehrteilig aufgebaut. Demgemäß ist in dem Ausführungsbeispiel gemäß Fig. 3 vorgesehen, das Verfahren 100 in mehreren Stufen auszuführen.

In das System 30, insbesondere in das erste Systemteil 32, wird der Eingabedatensatz 36 in ein Eingabegerät **37** des Systems 30 eingegeben. Das Eingabegerät 37 kann beispielsweise eine Datenschnittstelle umfassen, mit der beispielsweise Daten online abrufbar oder online, beispielsweise auf einem webbasierten Formular, eingebbar sind. Sie kann auch eine Mensch-Maschine-Schnittstelle aufweisen, beispielsweise in Form einer Tastatur, einer Maus und / oder eines Touchscreens oder dergleichen.

Das erste Systemteil 32 filtert anhand des Eingabedatensatzes 36 ein oder mehrere der Vergleichsdatensätze 26 vor. Im in Fig. 3 dargestellten Beispiel resultieren hieraus drei verschiedene Vergleichsdatensätze 26.

Das zweite Systemteil 33 trifft innerhalb der vorgefilterten Vergleichsdatensätze 26 eine Endauswahl und liefert einen Ergebnisdatensatz **38,** der somit in diesem Ausführungsbeispiel einem der vorgefilterten Vergleichsdatensätze 26 entspricht.

Das dritte Systemteil 34 bildet eine Qualitätssicherungsstufe. Anhand von möglichst von den Filter- bzw. Auswahlverfahren der Systemteile 32, 33 unabhängigen Kriterien führt das dritte Systemteil 34 eine abschließende Prüfung auf Plausibilität des Ergebnisdatensatzes 38 durch. Beispielsweise kann das dritte Systemteil 34 eingerichtet sein zu prüfen, ob im Eingabedatensatz 36 angegebene absolute Ausschlusskriterien durch den Ergebnisdatensatz 38 tatsächlich eingehalten werden. Beispielsweise kann im Eingabedatensatz 36, wenn er einen Wanddurchbruch betrifft und wenn ein Brandschutz-Schutzelement zu ermitteln ist, eine Wanddicke der durchbrochenen Wand angegeben sein. Dann sollte das dem Ergebnisdatensatz 38 entsprechende Brandschutz-Schutzelement auch für diese Wanddicke tatsächlich zertifiziert sein. Bei einer Brandschutzdichtpaste zur Ausfüllung eines Spalts kann ferner beispielsweise überprüft werden, ob die Brandschutzdichtpaste für im Eingabedatensatz 36 angegebene Abmessungen eines abzudichtenden Spalts auch tatsächlich zertifiziert ist.

Sofern diese Qualitätssicherung positiv ausfällt, wird auf einem Ausgabegerät **40** beispielsweise ein Bezeichner **42** des dem Ergebnisdatensatz 38 entsprechenden Schutzelements 12 ausgegeben. Das Ausgabegerät 40 kann eine Bildausgabeeinheit, beispielsweise einen Monitor, eine Anzeigeeinheit eines Rechners, beispielsweise eines Tablets oder eines Smartphones, oder dergleichen umfassen. Das Ausgabegerät 40 kann alternativ oder ergänzend auch eine Datenschnittstelle zur Übertragung des Ergebnisdatensatzes 38 oder eines Teils dessen an einen weiteren Rechner umfassen. Der weitere Rechner kann beispielsweise ein Planungssystem zur Bauwerksplanung sein und / oder umfassen. Der weitere Rechner kann auch ein Bauausführungssystem sein und / oder umfassen und / oder einen Teil eines solchen Bauausführungssystems bilden. Das Bauausführungssystem kann beispielsweise eingerichtet sein, eine ausreichende Menge von Schutzelementen 12 des dem Bezeichner 42 entsprechenden Typs zu bestellen, an eine Baustelle, an der das Bauwerksteil 10 errichtet wird, zu liefern und / oder dort automatisiert, beispielsweise mit Hilfe eines geeigneten Bauroboters, zu verwenden, insbesondere einzubauen.

Allgemein ist denkbar, dass das System 30 auch lediglich einteilig ausgebildet ist. Alternativ kann es auch zweiteilig oder mehr als dreiteilig ausgebildet sein. Dementsprechend kann das Verfahren 100 alternativ einschrittig, zweischrittig oder mehr als dreischrittig ausgebildet sein. Denkbar ist auch, dass das System 30 als Empfehlungssystem und / oder das Verfahren 100 als Empfehlungsverfahren ausgebildet ist. Beispielsweise aus rechtlichen Gründen kann es erforderlich sein, dass eine abschließende Auswahl eines Schutzelements nicht rein maschinell erfolgen darf. Dann kann beispielsweise vorgesehen sein, dass die Ergebnisse des Systems 30 lediglich einen Vorschlag bilden, den ein menschlicher Experte, insbesondere auf dem Gebiet der betreffenden Schutzelementart, abschließend prüft. Beispielsweise kann dazu das dritte Systemteil 34 durch den menschlichen Experten ersetzt sein.

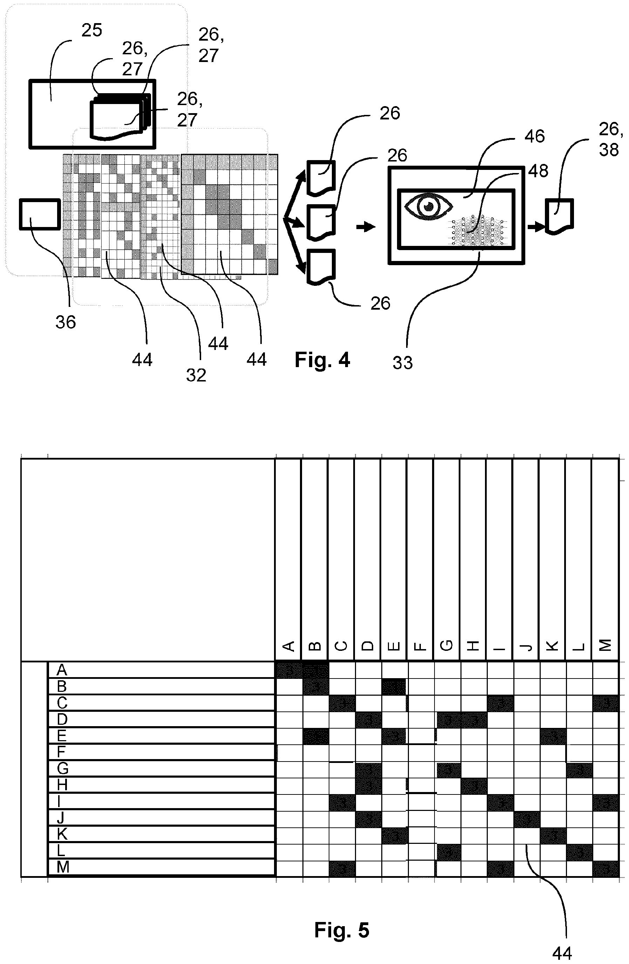

**Fig. 4** zeigt Details zu einem Ausführungsbeispiel der Systemteile 32, 33 sowie der entsprechenden Schritte des Verfahrens 100 (siehe Fig. 3).

In diesem Ausführungsbeispiel weist das erste Systemteil 32 eine Vielzahl von Abbildungsmatrizen **44** für eine 1:n-Zuordnung von Eigenschaftswerten verschiedener Eigenschaften auf.

Ein Beispiel einer solchen Abbildungsmatrix 44 für Eigenschaftswerte betreffend Brandschutzelemente für Durchbrüche ist in **Fig. 5** dargestellt.

Einem der zeilenweise aufgelisteten Eigenschaftswerte **A, B, C, D, E, F, G, H, I, J, K, L** oder **M** des Eingabedatensatzes 36 (siehe Fig. 4) werden je nach markierten Feldern ein oder mehrere der spaltenweise aufgelisteten Eigenschaftswerte A, B, C, D, E, F, G, H, I, J, K, L, M von Vergleichsdatensätzen 26 (siehe Fig. 4) zugeordnet. Betrifft die Eigenschaft beispielsweise eine Materialart eines Untergrundes können die Eigenschaftswerte A, B, C, D, E, F, G, H, I, J, K, L, M beispielsweise "Beton", "Gipskarton", "Holz", "Spanplatte", "metallverschalter Beton" usw. entsprechen.

Beispielsweise sind dem Eigenschaftswert C neben dem identen Eigenschaftswert C noch die Eigenschaftswerte I und M zugeordnet. Hier ergibt sich somit eine 1 :3-Zuordnung.

Dem Eigenschaftswert A ist neben dem identen Eigenschaftswert A noch B zugeordnet. Somit ergibt sich hier eine 1 :2-Zuordnung.

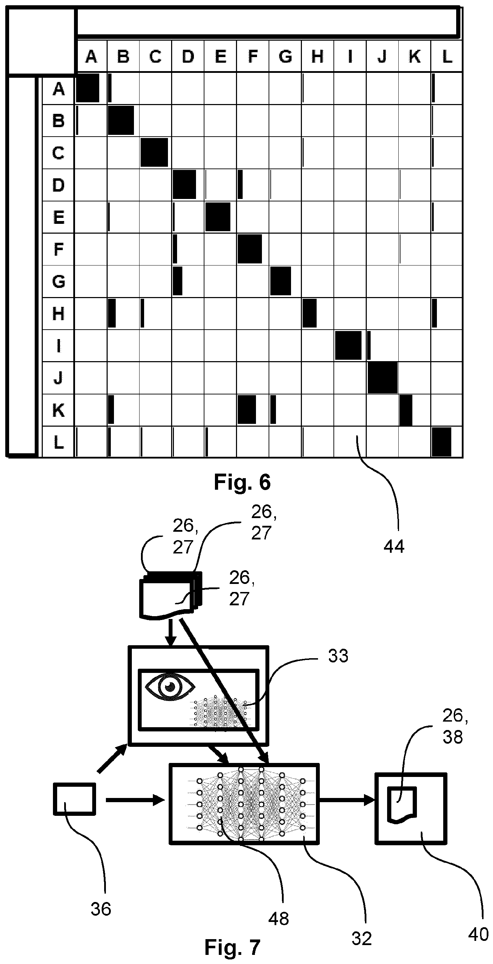

Ein alternatives Ausführungsbeispiel einer Abbildungsmatrix 44 ist in Fig. 6 dargestellt. Diese Abbildungsmatrix 44 entspricht weitgehend der vorangehend beschriebenen Abbildungsmatrix 44. Eine Besonderheit dieser Abbildungsmatrix 44 ist jedoch, dass in dieser auch abgestufte Zuordnungsgrade, in Fig. 6 durch unterschiedliche Füllungsgrade der einzelnen Felder dargestellt, berücksichtigt sind. Die Zuordnungsgrade können beispielsweise Ähnlichkeitsgraden entsprechen. Sie können auch Anteilen entsprechen, in denen die verschiedenen Eigenschaftswerte, hier Materialarten, ersatzweise berücksichtigt werden sollten.

Wie weiter in Fig. 4 schematisch dargestellt, ist das erste Systemteil 32 eingerichtet, für jede Eigenschaft, die aus dem Eingabedatensatz 36 isolierbar ist, den betreffenden Eigenschaftswerten weitere Alternativwerte zuzuordnen. Aus den Vergleichsdatensätzen 26 filtert das erste Systemteil 32 dann diejenigen Vergleichsdatensätze 26, die für jede der isolierbaren Eigenschaften jeweils entweder einen mit dem jeweiligen zugehörigen Eigenschaftswert des Eingabedatensatzes 36 übereinstimmenden Eigenschaftswert oder einen der Alternativwerte aufweisen.

Zur weiteren Reduktion der Menge vorselektierter Vergleichsdatensätze 26 kann das erste Systemteil 32 eingerichtet sein, unter den aufgefundenen Vergleichsdatensätze 26 eine hierarchische Clusteranalyse, beispielsweise auf Basis einer Gower-Distanzmetrik, auszuführen. Als Ergebnis kann das erste Systemteil 32 ferner eingerichtet sein, bestimmter Cluster und von diesen bestimmte Elemente auszuwählen. Beispielsweise kann das erste Systemteil eingerichtet sein, die drei Cluster und deren Zentralelemente, deren Zentralelemente dem Eingabedatensatz 36 hinsichtlich der Gower-Distanzmetrik am nächsten kommen, auszuwählen.

Somit können sich beispielsweise drei Vergleichsdatensätze 26 als Zwischenergebnis ergeben und als Eingabedaten für das zweite Systemteil 33 dienen.

Das zweite Systemteil 33 weist in diesem Ausführungsbeispiel eine Bildverarbeitungseinheit 46 auf. Die Bildverarbeitungseinheit 46 weist einen Maschinenlerner **48** in Form eines mehrstufigen neuronalen Netzwerkes auf. Der Maschinenlerner 48 ist trainiert, die Bilddaten 20 (siehe Fig. 2a, 2b und 2c) zu segmentieren. Beispielsweise kann er eingerichtet sein, Geraden versus Krümmungen zu unterscheiden, Winkel zu erkennen und / oder zu klassifizieren, und / oder weitere, für die Anwendungssituationen 14 (Fig. 1) typische Elemente, beispielsweise Rohrleitungen, Träger, Gebäudeteile oder dergleichen, zu identifizieren.

Das zweite Systemteil 33 ist eingerichtet, mit Hilfe der Bildverarbeitungseinheit 46 die Bilddaten 20 des Eingabedatensatzes 36 sowie die Bilddaten 20 der als Zwischenergebnis identifizierten Vergleichsdatensätze 26 zu klassifizieren. Derjenige Vergleichsdatensatz 26 oder diejenigen Vergleichsdatensätze 26, die gemäß dieser Klassifikation ihrer Bilddaten 20 eine größte Ähnlichkeit, beispielsweise wiederum ermittelt anhand einer Gower-Distanzmetrik, aufweisen, bilden dann den Ergebnisdatensatz 38 oder die Ergebnisdatensätze 38.

**Fig. 7** stellt ein weiteres Beispiel für das erste und das zweite Systemteil 32, 33 und die entsprechenden Teilschritte des Verfahrens 100 (siehe Fig. 3) dar.

Das zweite Systemteil 33 kann dabei dem in Verbindung mit Fig. 4 beschriebenen zweiten Systemteil 33 entsprechen.

Bei diesem Ausführungsbeispiel werden wiederum Bilddaten 20 (siehe Fig. 2a bis 2c) des Eingabedatensatzes 36 sowie von Vergleichsdatensätzen 26 durch das zweite Systemteil 33 ausgewertet. Die aus den Bilddaten 20 extrahierten Daten bilden weitere, wenigstens nominalskalierte Eigenschaften des Eingabedatensatzes 36 bzw. der Vergleichsdatensätze 26.

Das erste Systemteil 32 dieser Ausführungsform weist einen weiteren Maschinenlerner 48 auf, der beispielsweise ebenfalls ein mehrschichtiges neuronales Netz umfasst. Der Maschinenlerner 48 ist, beispielsweise mittels Backpropagation und beispielsweise unter Verwendung von Experteneinschätzungen, trainiert, einem Eingabedatensatz 36 einen ähnlichsten der Vergleichsdatensätze 26 bzw. die ähnlichste der Vergleichs-Anwendungssituationen 27 zuzuordnen und den entsprechenden Vergleichsdatensatz 26 und / oder dessen Bezeichner auszugeben.

Der Eingabedatensatz 36 wird somit zunächst bezüglich seiner Bilddaten 20 analysiert. Die hierdurch gewonnenen zusätzlichen, wenigstens nominalskalierten Eigenschaften werden mit den übrigen, wenigstens nominalskalierten Eigenschaften des Eingabedatensatzes 36 dem ersten Systemteil 32 zugeführt. Dieses, insbesondere dessen Maschinenlerner 48, ermittelt den ähnlichsten der Vergleichsdatensätze 26 bzw. der zugehörigen Vergleichs-Anwendungssituationen 27 als Ergebnisdatensatz 38 und gibt diesen auf dem Ausgabegerät 40 aus.

Alternativ zur Ausgabe auf dem Ausgabegerät 40 oder ergänzend dazu ist auch denkbar, dass eine abschließende Qualitätssicherung, beispielsweise mit Hilfe eines dritten Systemteils 34 (siehe Fig. 3), stattfindet.

### Bezugszeichenliste

- 10: Bauwerksteil
- 12: Schutzelement
- 14: Anwendungssituation
- 16: Raum
- 20: Bilddaten
- 22: nominalskalierte Daten
- 24: Textdaten
- 25: Datenbank
- 26: Vergleichsdatensatz
- 27: Vergleichs-Anwendungssituation
- 28: Ergebnisdatensatz
- 30: System
- 32: erstes Systemteil
- 33: zweites Systemteil
- 34: drittes Systemteil
- 36: Eingabedatensatz
- 37: Eingabegerät
- 38: Ergebnisdatensatz
- 40: Ausgabegerät
- 42: Bezeichner
- 44: Abbildungsmatrix
- 48: Maschinenlerner
- 100: Verfahren
- A, B, C, D, E, F, G, H, I, J, K, L, M: Eigenschaftswert

## Patentansprüche

1. **System (30)** zur Bestimmung eines Schutzelementes (12) einer Schutzelementart zur Verwendung in einer Anwendungssituation (14) , die ein Bauwerksteil (10) betrifft, umfassend ein Eingabegerät (37), ein Ausgabegerät (40) sowie eine Datenbank (25), wobei die Datenbank (25) eine Vielzahl von Vergleichsdatensätzen (26) umfasst, die Daten zu jeweils einer Vergleichs-Anwendungssituation (27) umfassen, wobei das System (30) eingerichtet ist, über das Eingabegerät (37) einen Eingabedatensatz (36) zu empfangen, der Daten zu der Anwendungssituation (14) umfasst, und abhängig von dem Eingabedatensatz (36) über das Ausgabegerät (40) wenigstens einen der Vergleichsdatensätze (26), einen Teil wenigstens eines der Vergleichsdatensätze (26), einen Verweis auf wenigstens einen der Vergleichsdatensätze (26) und / oder wenigstens einen Bezeichner (42) eines Schutzelements (12) der Schutzelementart auszugeben.

2. System (30) nach dem vorhergehenden Anspruch, **dadurch gekennzeichnet, dass** die Datenbank (25) zu wenigstens einem, vorzugsweise zu allen, der Vergleichsdatensätze (26) jeweils wenigstens einen Bezeichner (42) eines zugeordneten Schutzelements (12) der Schutzelementart umfasst.

3. System (30) nach einem der vorhergehenden Ansprüche, **dadurch gekennzeichnet, dass** der Eingabedatensatz (36) und / oder wenigstens einer der Vergleichsdatensätze (26) Bilddaten (20) umfasst.

4. System (30) nach einem der vorhergehenden Ansprüche, **dadurch gekennzeichnet, dass** der Eingabedatensatz (36) und / oder wenigstens einer der Vergleichsdatensätze (26) nominalskalierte (22) Daten umfasst.

5. System (30) nach einem der vorhergehenden Ansprüche, **dadurch gekennzeichnet, dass** der Eingabedatensatz (36) und / oder wenigstens einer der Vergleichsdatensätze (26) Textdaten umfasst.

6. System (30) nach einem der vorhergehenden Ansprüche, **dadurch gekennzeichnet, dass** das System (30) eingerichtet ist, eine Teilmenge der Vergleichsdatensätze (26) in Abhängigkeit vom Eingabedatensatz (36) zu bestimmen.

7. System (30) nach einem der vorhergehenden Ansprüche, **dadurch gekennzeichnet, dass** das System (30) wenigstens eine Abbildungsmatrix (44) zur 1:n-Zuordnung von Eigenschaftswerten (510, 511, 520, 530, 540, 541, 550) einer Anwendungssituation (14) aufweist.

8. System (30) nach einem der vorhergehenden Ansprüche, **dadurch gekennzeichnet, dass** das System (30) einen Maschinenlerner (48) aufweist.

9. System (30) nach einem der vorhergehenden Ansprüche, **dadurch gekennzeichnet, dass** das System (30) eingerichtet ist, bei Überschreiten eines Grenzwertes einer Distanz zwischen dem die Anwendungssituation (14) repräsentierenden Eingabedatensatz (36) und einem oder mehreren der Vergleichsdatensätze keinen Vergleichsdatensatz (26), keinen Verweis auf wenigstens einen der Vergleichsdatensätze (26) und keinen Bezeichner (42) auszugeben.

10. System (30) nach einem der vorhergehenden Ansprüche, **dadurch gekennzeichnet, dass** die Schutzelementart Brandschutzelemente, Dämmelemente, Lärmschutzelemente und / oder Feuchtigkeitsschutzelemente betrifft.

11. **Verfahren (100)** zur Bestimmung eines Schutzelementes (12) einer Schutzelementart zur Verwendung in einer Anwendungssituation (14) , die ein Bauwerksteil (10) betrifft, wobei unter Verwendung eines Systems (30) nach einem der vorhergehenden Ansprüche ein Eingabedatensatz (36), der Daten zu der Anwendungssituation (14) umfasst, mit einer Vielzahl von Vergleichsdatensätzen (26), die jeweils Vergleichs-Anwendungssituationen (27) sowie jeweils wenigstens ein zugeordnetes Schutzelement (12) der Schutzelementart umfassen, verglichen wird, und wobei als Ergebnis des Vergleichs wenigstens einer der Vergleichsdatensätze (26), ein Teil wenigstens eines der Vergleichsdatensätze (26), ein Verweis auf wenigstens einen der Vergleichsdatensätze (26) und / oder ein Bezeichner (42) eines Schutzelements (12) der Schutzelementart ermittelt wird.
